# EUROPÄISCHE PATENTSCHRIFT

(11) **EP 2 106 530 B1**
(45) Veröffentlichungstag und Bekanntmachung des Hinweises auf die Patenterteilung: **20.02.2013**
(21) Anmeldenummer: 07856128.9
(22) Anmeldetag: 18.12.2007
(51) Int. Cl.: G01B 11/24, G01B 11/25, G01M 17/02, G02B 26/10

(54) **VERFAHREN UND VORRICHTUNG ZUR ERFASSUNG DER DREIDIMENSIONALEN OBERFLÄCHE EINES OBJEKTS, INSBESONDERE EINES FAHRZEUGREIFENS**
METHOD AND DEVICE FOR SENSING THE THREE-DIMENSIONAL SURFACE OF AN OBJECT, IN PARTICULAR OF A VEHICLE TIRE
PROCÉDÉ ET DISPOSITIF POUR DÉTECTER LA SURFACE TRIDIMENSIONNELLE D'UN OBJET, EN PARTICULIER D'UN PNEU DE VÉHICULE

(30) Priorität: 28.12.2006 DE 102006062447
(43) Veröffentlichungstag der Anmeldung: 07.10.2009
(73) Patentinhaber: Chronos Vision GmbH, 12247 Berlin (DE)
(72) Erfinder: POGADE, Wolfgang, 12247 Berlin (DE)
(74) Vertreter: Willems, Volker
(86) Internationale Anmeldenummer: PCT/DE2007/002282
(87) Internationale Veröffentlichungsnummer: WO 2008/080385

(56) Entgegenhaltungen:
- DE-A1- 1 809 459
- DE-A1- 4 029 339
- US-A- 2 222 937
- US-A- 3 692 414
- US-A- 4 355 904
- US-A- 5 812 256
- US-A1- 2006 232 787

## Beschreibung

Die vorliegende Erfindung betrifft ein Verfahren zu Erfassung der dreidimensionalen Oberfläche eines Objekts mittels Triangulation gemäß dem Oberbegriff von Patentanspruch 1, sowie eine Vorrichtung zur Erfassung der dreidimensionalen Oberfläche eines Objekts durch Triangulation gemäß dem Oberbegriff von Patentanspruch 8.

Die Erfassung von Objektoberflächen ist in verschiedenen Anwendungen von Bedeutung. Beispielsweise besteht in der Verkehrstechnik das Bedürfnis, den Zustand von Reifenoberflächen zu kontrollieren und die Profiltiefe von Kraftfahrzeugreifen zu messen. In der Verkehrsüberwachung bzw. Verkehrstechnik kann durch schnelle Messung der Profiltiefen von Kraftfahrzeugreifen die Verkehrssicherheit erheblich erhöht werden. Dabei ist es wünschenswert, wenn die Messung zum Beispiel auch am bewegten Fahrzeug vorgenommen werden kann. Durch Messung der Profiltiefe von Kraftfahrzeugreifen im fließenden Verkehr wäre es möglich, Fahrzeuge mit unzureichendem Reifenprofil zu identifizieren, wodurch die Einhaltung der gesetzlichen Vorschriften besser durchgesetzt werden könnte.

Aber auch in der industriellen Fertigung von Produkten ist die Erfassung der Oberfläche wichtig, beispielsweise um Qualitätskontrollen durchzuführen, oder um Produkte in automatisierten Prozessen zu fertigen.

Im Stand der Technik werden dreidimensionale Oberflächen zum Beispiel mit Hilfe des Lichtschnitt - Triangulationsverfahrens erfasst bzw. vermessen. Dabei wird eine Oberfläche mit einem Lichtstrahl oder einer Beleuchtungslinie schräg beleuchtet und der von der Objektoberfläche zurückreflektierte Lichtstrahl wird erfasst. Aus der Verschiebung des reflektierten Lichtstahls, die von der Lage des jeweiligen Reflexionspunktes an der Objektoberfläche abhängig ist, wird die Oberflächenstruktur ermittelt.

Die Druckschrift DE19705047A1 zeigt beispielsweise ein Verfahren und eine Vorrichtung zur Messung der Profiltiefe eines Kraftfahrzeugreifens, bei dem das Reifenprofil mit Laserlicht beaufschlagt wird und das vom Reifenprofil reflektierte Licht durch einen bildauflösenden Sensor erfasst wird. Der bildauflösende Sensor beobachtet die Form des Lichtflecks und erzeugt Ausgangsdaten nach Maßgabe der Profiltiefe. Während der Messung wird der Kraftfahrzeugreifen rotiert, um die Messung an mehreren Stellen des Reifenprofils durchführen zu können. Die Messung wird zum Beispiel an einem Bremsprüfstand durchgeführt, in dem sich der Reifen dreht, während er vom Laserlicht beaufschlagt wird.

Die Druckschriften WO96/37754 und DE4316984A1 zeigen jeweils Verfahren und Vorrichtungen zur Ermittlung der Profiltiefe von Fahrzeugreifen, bei denen das Lichtschnitt - Triangulationsverfahren durchgeführt wird, wobei die Messeinrichtung relativ zur Objekt- bzw. Reifenoberfläche bewegt wird, um die Oberfläche zu erfassen.

Verfahren zur Reifenprofilmessung im fließenden Verkehr sind beispielsweise in den Druckschriften DE-OS1809459 und EP0469948A1 offenbart. Dabei werden zum Beispiel stationäre Messeinrichtungen aus einer Grube heraus benutzt, die eine einzelne Messlinie auf das Objekt projizieren, um daraus eine auswertbare Profillinie zu erhalten. Um eine erhöhte Auswertungssicherheit zu erhalten, sind mehrere solche Anlagen hintereinander vorgesehen.

Die Druckschrift DE10141363A1 beschreibt allgemein eine Abtastvorrichtung, wobei ein Abtaststrahl durch ein sich drehendes Durchlichtprisma auf eine zu untersuchende Szene projiziert wird. Das dort gezeigte Verfahren und die Anordnung sind jedoch nicht zur Triangulation geeignet, da der Abtaststrahl und der Reflektionsstrahl in einer Ebene liegen.

Das US Patent Nr. 3,692,414 offenbart ein Verfahren zum Abtasten einer Oberfläche, bei dem ein Lichtstrahl durch ein rotierendes Prisma verläuft und dabei verschoben wird, bevor der Lichtstrahl auf die Oberfläche gelangt. Der von der Oberfläche reflektierte Lichtstrahl wird von einem Sensor erfasst.

Das Dokument DE 40 29 339 A1 beschreibt eine Abtastvorrichtung für Messflächen mit einer Strahlquelle für einen Punktlichtstrahl, der mittels einem sich drehenden Glaskörper mit zwei parallelen Oberflächen parallel verschoben wird, um die Messfläche in einer Richtung abzutasten. Der von der Messfläche reflektierte Punktlichtstrahl durchläuft ebenfalls den Glaskörper, bevor er von einem Empfänger erfasst wird. Um der Längsbewegung des Punktlichtstrahls eine Querbewegung zu überlagern, ist optional ist ein zweiter Glaskörper vorgesehen, der um eine Achse rotiert, die senkrecht zur Drehachse des ersten Körpers ausgerichtet ist.

Das Dokument DE 18 09 459 A1 beschreibt eine Anordnung zur Messung der Profiltiefe von Fahrzeugreifen, bei dem ein Lichtband auf die Reifenoberfläche abgebildet wird. Die sich dabei ergebende Stufenlinie wird erfasst und mit der Lichtschnittmethode ausgewertet.

Das Dokument US 2 222 937 A zeigt eine Scanvorrichtung, bei der ein Lichtstrahl zwei nacheinander angeordnete rotierende Prismen durchläuft, deren Drehachsen senkrecht zueinander ausgerichtet sind.

Das Dokument US 5 812 256 A zeigt ein System zur optischen Untersuchung der Ausrichtung von Rädern. Ein flacher Laser Strahl platziert eine Lichtlinie auf einer zu untersuchenden Oberfläche und eine Kamera registriert die Schnittlinie des Laserstrahls mit dort vorhandenen Objekten. Es wird eine dreidimensionale topographische Karte eines Rades oder Reifens erstellt.

Das Dokument US 2006/0232787 A1 offenbart ein Verfahren zur Erfassung von Profilen, bei dem ein Lichtband auf eine sich bewegende Oberfläche projiziert wird und das reflektierte Licht erfasst wird, um mittels Triangulation das Profil zu bestimmen. Auf diese Weise wird mittels Triangulation die Oberfläche eines sich bewegenden Rades bestimmt.

Es ist die Aufgabe der vorliegenden Erfindung, ein Verfahren und eine Vorrichtung zu schaffen, mit denen eine ruhende Objektoberfläche mit Hilfe des Triangulations- oder Lichtschnitt-Triangulationsverfahrens in sehr kurzer Zeit und mit hoher Geschwindigkeit automatisch vermessen werden kann. Insbesondere soll die Profiltiefe von Kraftfahrzeugreifen im fließenden Verkehr vermessen werden können.

Diese Aufgabe wird gelöst durch das Verfahren zur Erfassung der dreidimensionalen Oberfläche eines Objekts gemäß Patentanspruch 1, sowie durch die Vorrichtung zur Erfassung der dreidimensionalen Oberfläche eines Objekts gemäß Patentanspruch 8. Weitere vorteilhafte Merkmale und Details ergeben sich aus den abhängigen Ansprüchen, der Beschreibung und den Zeichnungen.

Bei dem erfindungsgemäßen Verfahren zur Erfassung der dreidimensionalen Oberfläche eines Objekts durch Triangulation wird von einer Lichtquelle ein Lichtstrahl ausgesendet, der geneigt auf eine zu erfassende Oberfläche eines Objektes projiziert wird, wobei der Lichtstrahl mittels eines rotierenden Prismas parallel zu seiner Strahlachse verschoben wird, so dass er die Oberfläche unter einem konstanten Neigungswinkel überstreicht, und der von der Oberfläche des Objekts reflektierte Lichtstrahl das rotierende Prisma ebenfalls durchläuft und parallel verschoben wird, so dass sich die vorhergehende Parallelverschiebung des Lichtstrahls wieder aufhebt, und der reflektierte Lichtstrahl von einem optischen Sensor erfasst wird, um aus Bilddaten, die vom optischen Sensor erzeugt werden, die Oberfläche des Objekts zu bestimmen. Dabei wird der ausgesendete Lichtstrahl mittels einer im Strahlengang nach dem Prisma angeordneten Spiegeleinrichtung derart zum Objekt hin umgelenkt, dass der von der Oberfläche des Objekts reflektierte Lichtstrahl das rotierende Prisma durch ein anderes Paar von Prismenflächen durchläuft als der ausgesendete Lichtstrahl.

Durch das erfindungsgemäße Verfahren kann der Lichtstrahl mit besonders hoher Geschwindigkeit über die Objektoberfläche geführt werden, sodass mit dem Triangulationsverfahren der vom Lichtstrahl erfasste Bereich der Oberfläche vermessen werden kann. Insbesondere kann mit dem Verfahren ein Teilbereich der Oberfläche eines Kraftfahrzeugreifens in so kurzer Zeit erfasst werden, dass die Vermessung der Profiltiefe im fließenden Verkehr möglich ist.

Vorteilhafterweise ist der Lichtstrahl als zweidimensionale Beleuchtungslinie geformt, die sich quer zur Strahlachse erstreckt, wobei die auf die zu erfassende Oberfläche projizierte Beleuchtungslinie während der Messung parallel verschoben wird. Dadurch kann ein gesamter Bereich der Oberfläche erfasst werden, der durch die sich parallel verschiebende Beleuchtungslinie überstrichen wird.

Insbesondere wird als Objekt zum Beispiel ein Fahrzeugreifen verwendet, wobei aus den Bilddaten die Profiltiefe des Fahrzeugreifens ermittelt wird.

Vorteilhafterweise wird das Objekt durch einen Spalt hindurch beleuchtet, wobei sich die Beleuchtungslinie in Längsrichtung des Spalts erstreckt und während der Messung die Breite des Spalts überstreicht. Dies ist insbesondere im Fall der Reifenprofiltiefenmessung von Vorteil, wenn beispielsweise der Spalt in der Fahrbahnoberfläche angeordnet ist. Dabei präsentiert sich für kurze Zeit der zu vermessende Reifen dem Lichtstrahl während er über dem Spalt abrollt. Während des Abrollvorgangs ist die auf dem Spalt befindliche Reifenoberfläche relativ zur Messvorrichtung im Ruhezustand. In dieser Zeit kann mit dem erfindungsgemäßen Verfahren die auf dem Spalt ruhende Reifenoberfläche erfasst und deren Profiltiefe gemessen werden.

Vorteilhafterweise wird der ausgesendete Lichtstrahl nach Durchlaufen des rotierenden Primas mittels einer justierbaren Spiegeleinrichtung auf das Objekt gelenkt. Die parallele Verschiebung des Lichtstrahls, bleibt dabei erhalten.

Der ausgesendete Lichtstrahl durchläuft das rotierende Prisma, wobei er parallel verschoben wird, und anschließend durchläuft der vom Objekt reflektierte Lichtstrahl das rotierende Prisma ein zweites Mal, um die beim ersten Durchlauf verursachte Parallelverschiebung nach der Reflektion am Objekt wieder aufzuheben. Das heißt, der vom Messobjekt, beispielsweise dem Kraftfahrzeugreifen, resultierende Reflektionsstrahl durchläuft auf dem Weg zum optischen Sensor ein zweites Mal das sich drehende Prisma, jedoch durch ein anderes Flächenpaar als der ausgesendete bzw. primäre Lichtstrahl. Dieser resultierende Reflektionsstrahl wird daher beim zweiten Durchgang durch das Prisma derart parallel verschoben, dass sich die beim ersten Durchgang erfolgte Parallelverschiebung wieder aufhebt. Dadurch bewegt sich der Reflektionsstrahl, der zum Beispiel als Profillinie vorliegt, relativ zum optischen Sensor nicht, obwohl die Beleuchtungslinie bzw. der primäre Lichtstrahl während der Drehung des Prismas parallel verschoben wird und dabei zum Beispiel die gesamte Breite des Beobachtungsspaltes überstreicht.

Vorteilhafterweise wird der zum Objekt gesendete Lichtstrahl mittels der Spiegeleinrichtung derart ausgerichtet, dass er parallel zu dem vom Objekt reflektierten Lichtstrahl verläuft. Dadurch, dass der zum Objekt gesendete Lichtstrahl und der vom Objekt reflektierte Lichtstrahl in weiten Bereichen parallel zueinander verlaufen, können die Abmessungen der Messvorrichtung besonders gering gehalten werden. Weiterhin kann der gegenseitige Abstand der beiden parallelen Lichtstrahlen je nach der gewünschten Anwendung eingestellt bzw. entsprechend verändert werden, sodass der Anwendungsbereich der Abtastvorrichtung äußerst flexibel ist.

Bevorzugt wird der Lichtstrahl vor dem Auftreffen auf das Objekt mittels Hilfsspiegeln so umgelenkt, dass er schräg auf die Oberfläche des Objekts einfällt.

Gemäß einem anderen Aspekt der Erfindung wird eine Vorrichtung zur Erfassung der dreidimensionalen Oberfläche eines Objekts mittels Triangulation geschaffen, die umfasst:
eine Lichtquelle, die einen Lichtstrahl zur Projektion auf eine zu erfassende Oberfläche eines Objektes aussendet; einen optischen Sensor, der den von der Oberfläche reflektierten Lichtstrahl erfasst und Bilddaten erzeugt; eine Auswerteeinheit, die aus den Bilddaten des optischen Sensors die Oberfläche des Objekts bestimmt; und ein rotierbares Prisma, das den auf die Oberfläche des Objekts projizierten Lichtstrahl parallel zu seiner Strahlachse verschiebt, so dass er die zu erfassende Oberfläche unter einem konstanten Neigungswinkel überstreicht; wobei das rotierbare Prisma derart angeordnet ist, dass sowohl der ausgesendete Lichtstrahl als auch der vom Objekt reflektierte Lichtstrahl das rotierbare Prisma durchläuft, so dass sich die beiden Parallelverschiebungen des Lichtstrahls gegenseitig aufheben. Weiterhin umfasst die Vorrichtung eine Spiegeleinrichtung zum Umlenken des ausgesendeten Lichtstrahls nach Durchlaufen des Prismas zum Objekt hin, wobei die Spiegeleinrichtung und das Prisma derart angeordnet sind, dass der von der Oberfläche des Objekts reflektierte Lichtstrahl das rotierende Prisma durch ein anderes Paar von Prismenflächen durchläuft als der ausgesendete Lichtstrahl.

Die Vorteile der erfindungsgemäßen Vorrichtung werden anhand des erfindungsgemäßen Verfahrens beschrieben.

Vorteilhafterweise ist die Lichtquelle derart ausgestaltet, dass der Lichtstrahl als Beleuchtungslinie geformt ist, die sich quer zur Strahlrichtung erstreckt, wobei die Drehachse des Prismas in der Ebene der Beleuchtungslinie liegt. Dadurch wird die Beleuchtungslinie beim Durchlaufen des rotierenden Prismas parallel verschoben, sodass ein Bereich der Oberfläche durch die sich parallel verschiebende Beleuchtungslinie überstrichen wird.

Vorteilhafterweise ist das Objekt ein Fahrzeugreifen, und die Auswerteeinrichtung ist zur Bestimmung der Profiltiefe des Fahrzeugreifens aus den Bilddaten ausgestaltet.

Insbesondere hat das rotierbare Prisma zum Beispiel eine geradzahlige Anzahl von Flächen. Dabei hat das rotierbare Prisma sich jeweils gegenüberliegende, parallel zueinander ausgerichtete Prismenflächen, durch die der ausgesendete Lichtstrahl geführt wird.

Bevorzugt umfasst die Vorrichtung eine Wand, in der ein Spalt ausgebildet ist, durch den das Objekt beleuchtet wird, wobei sich der Spalt parallel zur Beleuchtungslinie, das heißt in dessen Längsrichtung, erstreckt. Dabei kann die Wand zum Beispiel in eine Fahrbahnoberfläche integriert sein, sodass die Reifen von Fahrzeugen, die sich auf der Fahrbahn bewegen, auf dem Spalt abrollen und sich auf diese Weise kurzzeitig dem Lichtstrahl bzw. der Beleuchtungslinie präsentieren. In dieser Zeit kann die Beleuchtungslinie parallel über die Spaltbreit verschoben werden, sodass der gesamte Flächenbereich des Objekts oder Fahrzeugreifens, der auf dem Spalt aufliegt, vermessen werden kann.

Insbesondere können die Abmessungen des Prismas derart gewählt sein, dass die Parallelverschiebung der auf die zu erfassende Oberfläche projizierten Beleuchtungslinie im Wesentlichen der Breite des Spaltes entspricht.

Bevorzugt hat die optische Einrichtung mindestens ein Spiegelpaar mit gegeneinander geneigten Spiegeln, um den Lichtstrahl auf das Objekt zu lenken, während er parallel verschoben wird. Dadurch bleibt die Parallelverschiebung, die durch das rotierende Prisma bewirkt wird, auch nach der Reflektion an dem Spiegelpaar erhalten.

Bevorzugt ist das Spiegelpaar in Strahlrichtung verschiebbar und der Winkel zwischen den beiden Spiegeln ist zum Beispiel einstellbar. Dadurch kann das Spiegelpaar genau justiert werden, um den Licht- bzw. Messstrahl exakt auf die Messoberfläche auszurichten.

Das rotierbare Prisma ist derart im Strahlengang angeordnet, dass sowohl der ausgesendete Lichtstrahl als auch der vom Objekt reflektierte Lichtstrahl dasselbe Prisma durchläuft, sodass sich die beiden Parallelverschiebungen des Lichtstrahls beim jeweiligen Durchlaufen des Prismas gegenseitig aufheben. Dadurch trifft der vom Objekt reflektierte Lichtstrahl bzw. die vom Objekt reflektierte Profillinie stets an derselben Stelle auf den optischen Sensor, der zum Beispiel eine Kamera oder Teil einer Kamera ist. Das heißt, die sich aufgrund der Parallelverschiebung auf der Objektoberfläche ergebende zeitliche Veränderung der Profillinie wird durch den optischen Sensor erfasst und kann anschließend ausgewertet werden.

Vorteilhafterweise ist die optische Einrichtung derart ausgestaltet, dass der zum Objekt gesendete Lichtstrahl im Wesentlichen parallel zu dem vom Objekt reflektierten Lichtstrahl verläuft.

Insbesondere kann die optische Einrichtung Hilfsspiegel umfassen, die angrenzend an das Objekt angeordnet sind und den auf das Objekt gerichteten Lichtstrahl derart umlenken, dass er schräg auf die Oberfläche des Objekts trifft. Dadurch kann das Triangulationsverfahren auch bei im Wesentlichen parallelen Strahlengang durchgeführt werden.

Bevorzugt umfasst die Vorrichtung ein Gehäuse, das Fenster mit selbstreinigenden Oberflächen aufweist, durch die der ausgesendete und/oder der vom Objekt reflektierte Lichtstrahl geführt wird.

Nachfolgend wird die Erfindung beispielhaft anhand von Zeichnungen beschrieben, in denen:
- **Fig. 1**: eine erste bevorzugte Ausführungsform der erfindungsgemäßen Vorrichtung in einer Schnittansicht prinzipiell zeigt;
- **Fig. 2**: eine perspektivische Darstellung der erfindungsgemäßen Vorrichtung während der Vermessung des Profils eines Fahrzeugreifens als Objekt zeigt;
- **Fig. 3a-d**: den zeitlichen Ablauf der Vermessung eines Reifenprofils schematisch darstellen;
- **Fig. 4**: eine Vorrichtung gemäß einer zweiten bevorzugten Ausführungsform der Erfindung in einer schematischen Schnittansicht zeigt, wobei der Strahlengang parallel gestaltet **ist;**
- **Fig. 5a und 5b**: das Lichtschnitt - Triangulationsverfahren am Beispiel der Vermessung einer glatten Oberfläche darstellen;
- **Fig. 6a und 6b**: das Lichtschnitt - Triangulationsverfahren am Beispiel einer unebenen Oberfläche darstellen; und
- **Fig.7**: ein Beispiel eines Messbildes zeigt, das mit der erfindungsgemäßen Vorrichtung und dem erfindungsgemäßen Verfahren erstellt wurde.

Vorteile und Merkmale, die im Zusammenhang mit der erfindungsgemäßen Vorrichtung beschrieben werden, gelten auch für das erfindungsgemäße verfahren und umgekehrt.

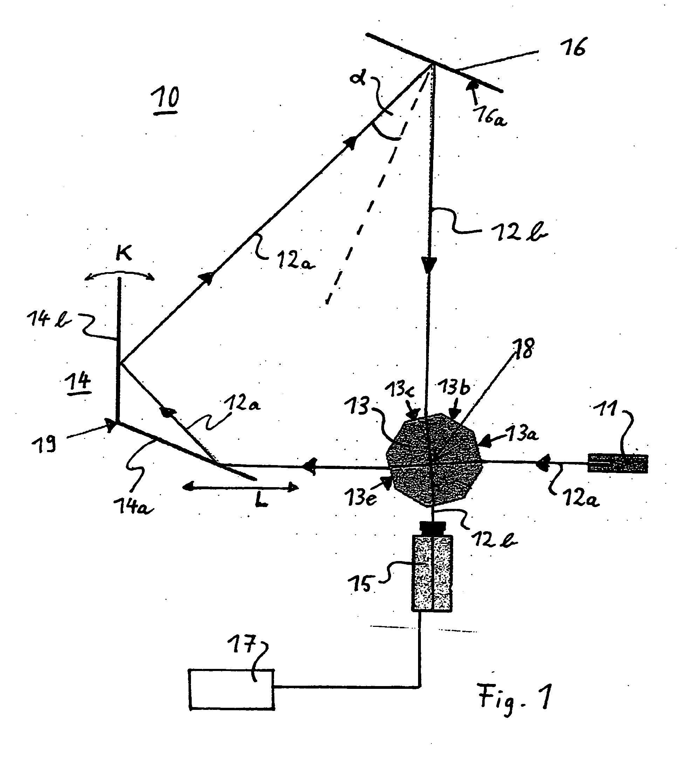

Figur 1 zeigt eine Messeinrichtung 10, die eine erste bevorzugte Ausführungsform der Erfindung darstellt und zur Erfassung der dreidimensionalen Oberfläche eines Objekts ausgestaltet ist. Die Messeinrichtung 10 hat eine Lichtquelle 11 in Form eines Lasers, die einen Lichtstrahl 12a aussendet, sowie ein rotierbares Prisma 13 und eine Spiegeleinrichtung 14, die nacheinander im Strahlengang angeordnet sind. Weiterhin umfasst die Messeinrichtung 10 einen optischen Sensor 15, der zum Beispiel als Kamera ausgestaltet ist und den von einem zu vermessenden Objekt 16 reflektierten Lichtstrahl 12b erfasst. Weiterhin ist eine Auswerteeinheit 17 vorgesehen, die vom optischen Sensor 15 erzeugte Bilddaten empfängt und aus den Bilddaten den Verlauf der Oberfläche des Objekts 16 bestimmt..

Im vorliegenden Beispiel ist der Laser 11 so ausgestaltet, dass er als Lichtstrahl 12a eine Beleuchtungslinie aussendet, die sich quer zur Strahlrichtung erstreckt, das heißt in der Figur 1 senkrecht zur Zeichnungsebene verläuft. Das rotierbare Prisma 13 hat eine Drehachse 18, die senkrecht zur Strahlrichtung gerichtet ist, sodass der vom Laser kommende Lichtstrahl 12a nacheinander auf die verschiedenen Flächen 13a, 13b, 13c usw. des Prismas 13 auftrifft und das Prisma 13 durchläuft. An einer Fläche 13e, die der Fläche 13a durch die der Lichtstrahl 12a eintritt, gegenüberliegt, verlässt der Lichtstrahl 12a das Primas. Dabei sind die Flächenpaare, durch die der Lichtstrahl 12a ein- und austritt, jeweils parallel zueinander gerichtet, sodass der Lichtstrahl 12a bei einer Drehung des Prismas 13 um die Drehachse 18 kontinuierlich in einer Richtung parallel verschoben wird. Die Parallelverschiebung wird durch den optischen Effekt der planparallelen Platte verursacht, die im vorliegenden Fall von den sich jeweils gegenüberliegenden parallelen Prismenflächen 13a, 13e gebildet wird. Sobald aufgrund der Drehung des Prismas 13 der Eintritt und Austritt des Lichtstrahls 12a durch das nächste Paar von Prismenflächen erfolgt, kehrt der aus dem Prisma 13 austretende Lichtstrahl in seine Ursprungsposition zurück und beginnt eine erneute Parallelverschiebung.

Die Spiegeleinrichtung 14 ist im Strahlengang hinter dem Prisma 13 angeordnet und besteht aus einem ersten Oberflächenspiegel 14a und einem zweiten Oberflächenspiegel 14b. Die Oberflächenspiegel 14a, 14b sind gegeneinander geneigt, sodass der Lichtstrahl 12a nacheinander auf die beiden Spiegeloberflächen auftrifft und in Richtung zum Objekt 16 gelenkt wird. Die beiden Spiegel 14a, 14b sind durch ein Verbindungsschamier 19 miteinander verbunden. Durch das Verbindungsschamier 19 kann der zweite Spiegel 14b gegenüber dem ersten Spiegel 14a in einer Kipprichtung K verkippt werden.

Die gesamte Spiegeleinrichtung 14 ist in einer Richtung L, die gleich der Richtung der Strahlachse des Lichtstrahls 12a ist, verschiebbar. Die Verkippung K des Spiegels 14b und die Verschiebung L der gesamten Spiegeleinrichtung 14 werden durch in der Figur nicht dargestellten Antriebseinheiten bewirkt.

Durch die Spiegeleinrichtung 14 und das rotierende Prisma 13, das eine gerade Anzahl von Prismenflächen aufweist, wird der Lichtstrahl 12a parallel zur Strahlachse verschoben, während er auf die Oberfläche 16a des Objekts 16 trifft. Dadurch bleibt der Neigungswinkel α, unter dem der Lichtstrahl 12a auf die Objektoberfläche trifft, konstant, während der sich parallel verschiebende Lichtstrahl 12a die Objektoberfläche überstreicht.

Die Spiegeleinrichtung 14 und das Prisma 13 sind so angeordnet, dass auch der vom Objekt 16 reflektierte Lichtstrahl 12b das Prisma 13 durchläuft, wobei er wiederum durch ein Paar von sich gegenüberliegenden Prismenflächen ein und austritt. Im vorliegenden Fall durchlaufen der vom Laser 11 ausgesendete Lichtstrahl 12a und der vom Objekt 16 reflektierte Lichtstrahl 12b das Prisma 13 senkrecht zueinander, das heißt, die Drehachse 18 des Prismas sowie die beiden das Prisma 13 durchlaufende Lichtstrahlen 12a und 12b sind orthogonal zueinander gerichtet.

Durch die geometrische Ausgestaltung des Prismas 13 und der Spiegeleinrichtung 14 mit dem sich daraus ergebenden Strahlverlauf bleibt der aus dem Prisma 13 austretende Lichtstrahl 12b stets an derselben Position und mit unveränderter Strahlrichtung. Das heißt, die Parallelverschiebung des Lichtsbahls 12a beim ersten Durchlauf durch das Prisma 13 wird durch die Parallelverschiebung des Lichtstrahls 12b beim zweiten Durchlauf durch das Prisma 13 wieder aufgehoben. Somit bleibt die Kamera oder optische Sensor 15 und die gesamte Messeinrichtung 10 mit dem rotierenden Prisma 13 relativ zur Oberfläche 16a des Objekts 16 im Ruhezustand, während die Oberfläche 16a vom Lichtstrahl 12a oder der Beleuchtungslinie überstrichen wird.

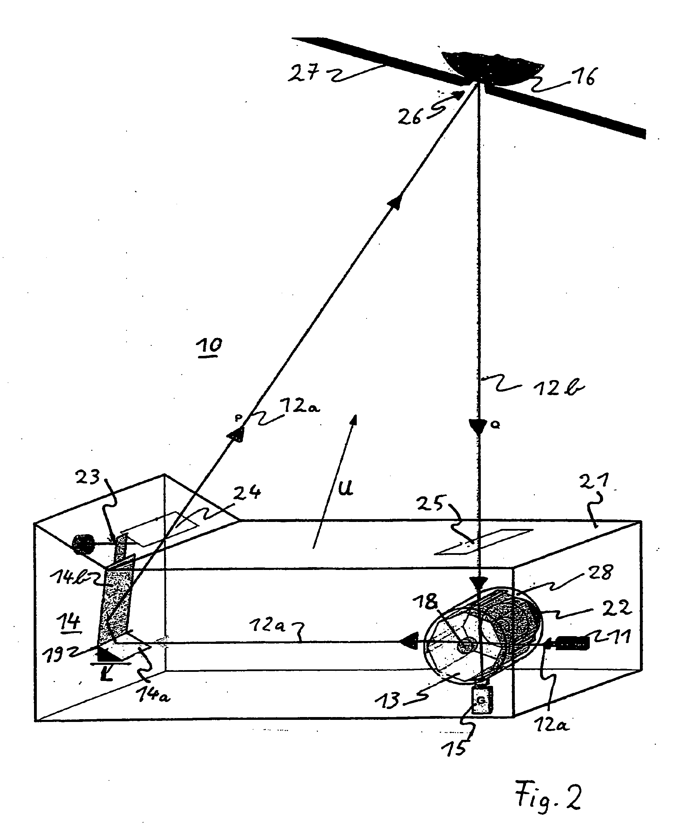

Figur 2 zeigt die Messeinrichtung 10 in perspektivischer schematischer Darstellung bei der Vermessung eines Reifenprofils. Dabei sind Elemente und Bauteile der Messeinrichtung 10, die unter Bezugnahme auf Figur 1 bereits beschrieben wurden, mit denselben Bezugszeichen wie in Figur 1 gekennzeichnet.

Die in Figur 2 gezeigte Messeinrichtung 10 umfasst zusätzlich ein Gehäuse 21, in dem die Teile der Messeinrichtung, wie sie in Figur 1 bereits beschrieben wurden, angeordnet sind. Das Gehäuse 21 hat eine Schutzfunktion. Dabei wird das Prisma 13 von einem Prismenmotor 22 angetrieben, der die Drehung des Prismas 13 um die Drehachse 18 bewirkt. Das Prisma 13 ist von einer Reflexschutzeinrichtung 28 umgeben. An der Spiegeleinrichtung 14 ist eine Kippmechanik 23 angeordnet, die den Spiegel 14b zum Zweck der Justage verkippt. Im vorliegenden Fall ist die Kippvorrichtung 23 als Drehspindel ausgestaltet, um den Winkel zwischen dem ersten Spiegel 14a und dem zweiten Spiegel 14b exakt einzustellen.

In dem Gehäuse 21 ist ein Austrittsfenster 24 angeordnet, durch das der zum Objekt 16 gesendete Lichtstrahl 12a den Innenraum des Gehäuses 21 verlässt, sowie ein Eintrittsfenster 25, durch das der vom Objekt 16 reflektierte Lichtstrahl 12b wieder in den Innenraum des Gehäuses 21 eintritt, um ein zweites Mal das Prisma 13 zu durchlaufen und anschließend auf die Kamera bzw. den optischen Sensor 15 zu treffen. Die Fenster 24 und 25 des Gehäuses 21 haben Oberflächen, die den bekannten Lotuseffekt zur Selbstreinigung aufweisen, sodass die Fenster 24, 25 bei einer Verschmutzung mit einem Wassersprühstrahl automatisch gereinigt werden können.

Das Objekt 16 ist in dem hier gezeigten Beispiel ein Fahrzeugreifen, dessen Profiltiefe mittels der Messeinrichtung 10 in Form eines 3-D Reifenscanners bestimmt wird. Bei dem hier dargestellten Verfahren und der gezeigten Anordnung sind der Lichtstrahl 12a, der zum Objekt 16 gesendet wird, und der vom Objekt 16 reflektierte Lichtstrahl 12b auf ihrem Weg vom Spiegel 12b zum Objekt 16 bzw. vom Objekt 16 zum rotierbaren Prisma 13 in voller Länge gegeneinander geneigt.

Auch in dem hier gezeigten Beispiel ist der Lichtstrahl 12a als Beleuchtungslinie geformt, die sich quer zur Strahlrichtung erstreckt und als Lichtlinie auf das Objekt 16 projiziert wird.

Dabei wird die Lichtlinie durch einen Spalt 26, der in einer Wand 27 angeordnet ist, auf das Objekt 16, das hier ein Fahrzeugreifen ist, abgebildet. Dabei erstreckt sich die Längsrichtung des Spalts 26 entlang der Beleuchtungslinie, die durch den Lichtstrahl 12a gebildet wird. Die Breite des Beobachtungsspalts 26 ist so bemessen, dass der Lichtstrahl 12a oder die Beleuchtungslinie während der gesamten Parallelverschiebung auf die Oberfläche des Reifens 16 trifft. Das heißt, die Beleuchtungslinie wird so eingestellt, dass sie parallel zum Beobachtungsspalt liegt und dessen Länge ausfüllt. Die Maße des Prismas 13 sind so gewählt, dass die Verschiebung der Beleuchtungslinie durch Drehung des Prismas 13 genau die Breite des Spalts 26 überstreicht.

Die Anordnung der Flächen des Prismas 13 sorgt dafür, dass ein Wechsel der Abtastebene dann erfolgt, wenn sich aufgrund der Rotation des Prismas 13 ein Wechsel der im Strahlengang der Beleuchtungslinie liegenden Seitenfläche oder Prismenfläche ergibt.

Durch die Neigung der Beleuchtungslinie bzw. des Lichtstrahls 12a gegen die gedachte Senkrechte der Objektoberfläche wird die Beleuchtungslinie bei der Reflektion an der Oberfläche des Objekts 16 durch dessen Oberflächenstruktur in eine Profillinie verändert, die den reflektierten Lichtstrahl 12b bildet. Dadurch kann mittels Triangulation die Profiltiefe des Reifens bestimmt und die Oberflächenstruktur vermessen werden. Die gedachte Senkrechte der Beobachtungsfläche ist in der Figur 2 durch den Pfeil U dargestellt.

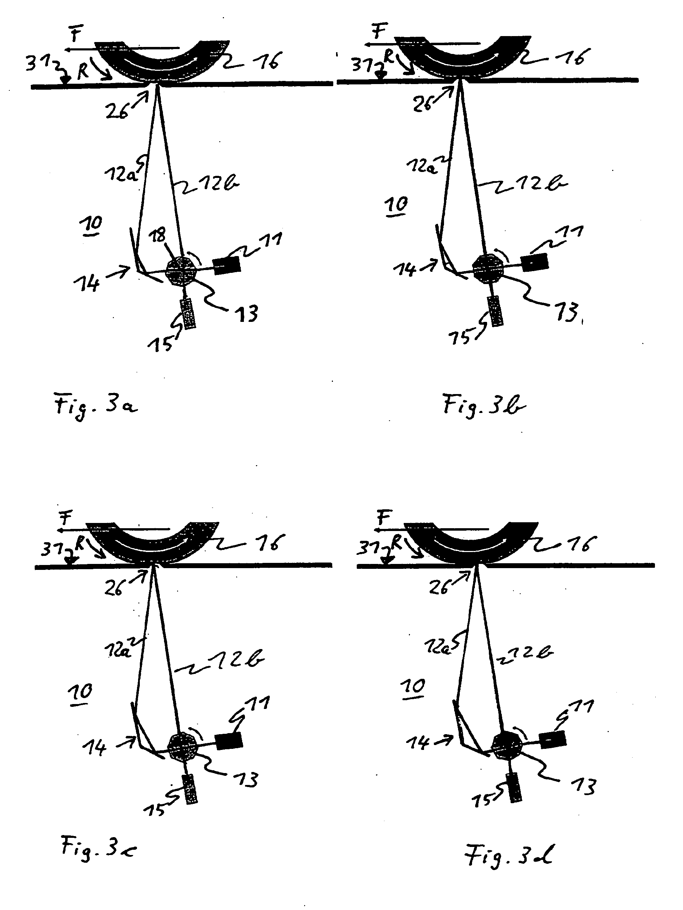

Die Figuren 3a bis 3b zeigen eine Reifenprofilmessung als besondere Ausgestaltung des erfindungsgemäßen Verfahrens zur Erfassung von Objektoberflächen. Dabei ist jeweils die Messeinrichtung schematisch mit dem Laser 11, dem rotierenden Prisma 13, der Spiegeleinrichtung 14 und der Kamera 15 als optischen Sensor dargestellt. Als Objekt 16 rollt ein Fahrzeugreifen auf einer Fahrbahnoberfläche 31 ab, in der der Beobachtungsspalt 26 angeordnet ist. Während der Reifen 16 über dem Spalt 26 abrollt, wie es in den Figuren 3a, 3b, 3c und 3d in verschiedenen Phasen dargestellt ist, präsentiert sich ein Bereich des Fahrzeugreifens 16 als ruhende Fläche über dem Beobachtungsspalt 26. Die Fahrtrichtung ist durch den Pfeil F und die Drehung des abrollenden Reifens durch den Pfeil R dargestellt.

Während die Reifenoberfläche beim Abrollen über dem Spalt 26 ruht, dreht sich das Prisma 13 um seine Drehachse 18 und nimmt die verschiedenen Positionen ein, die in den Figuren 3a - 3d gezeigt sind.

Zu Beginn der Messung (Figur 3a) ist der Messlichtstrahl 12a nach Durchlaufen des Prismas 13 parallel versetzt, sodass er am rechten Rand des Spalts 26 auf die Reifenoberfläche trifft, und von dort reflektiert wird. Die Beleuchtungslinie auf der Reifenoberfläche, die sich in der Figur senkrecht zur Zeichenoberfläche erstreckt, bildet nach der Reflektion eine Profillinie. Der reflektierte Lichtstrahl 12b, der die Profillinie bildet, durchläuft wiederum das Prisma 13 und wird dabei ebenfalls parallel versetzt, bevor er auf die Kamera 15 trifft.

In der zweiten Phase des Abrollvorgangs (Figur 3b) durchläuft der vom Laser 11 ausgesendete Lichtstrahl senkrecht die Prismenflächen, sodass kein paralleler Versatz erfolgt. Nach dem Umlenken durch die Spiegeleinrichtung 14 trifft der Lichtstrahl 12a als Beleuchtungslinie durch den Spalt 26 auf die Oberfläche des Reifens 16. Von dort wird er als Profillinie in Richtung auf das Prisma 13 reflektiert, wobei der reflektierte Lichtstrahl 12b senkrecht zum ausgesendeten Lichtstrahl 12a das Prisma 13 durchläuft. Dabei findet aufgrund der parallelen Primenfläche beim Durchlaufen des Prismas 13 ebenfalls kein paralleler Versatz des Lichtstrahls 12b statt. Der reflektierte Lichtstrahl 12b, der eine Profillinie ist, erreicht die Kamera 15, welche die Profillinie erfasst.

In den beiden nächsten Phasen des Messvorgangs, die in den Figuren 3c und 3d gezeigt sind, rotiert das Prisma 13 weiter, sodass der als Beleuchtungslinie geformte Lichtstrahl 12a sich weiter parallel in Richtung der Breite des Spalts 26 nach links verschiebt, bis er den linken Rand des Spalts 26 erreicht (Figur 3d). Durch das zweimalige Durchlaufen des Prismas 13 bleibt der reflektierte Lichtstrahl 12b am Ort des optischen Sensors 15 stets in einer konstanten Position, während der zum Objekt gesendete Lichtstrahl 12a die Objektoberfläche überstreicht. Nachdem der Lichtstrahl über die Spaltbreite parallel verschoben wurde und den sich präsenfierende Bereich der Reifenoberfläche erfasst hat, löst sich die Reifenoberfläche durch weiteres Abrollen von dem Spalt 26.

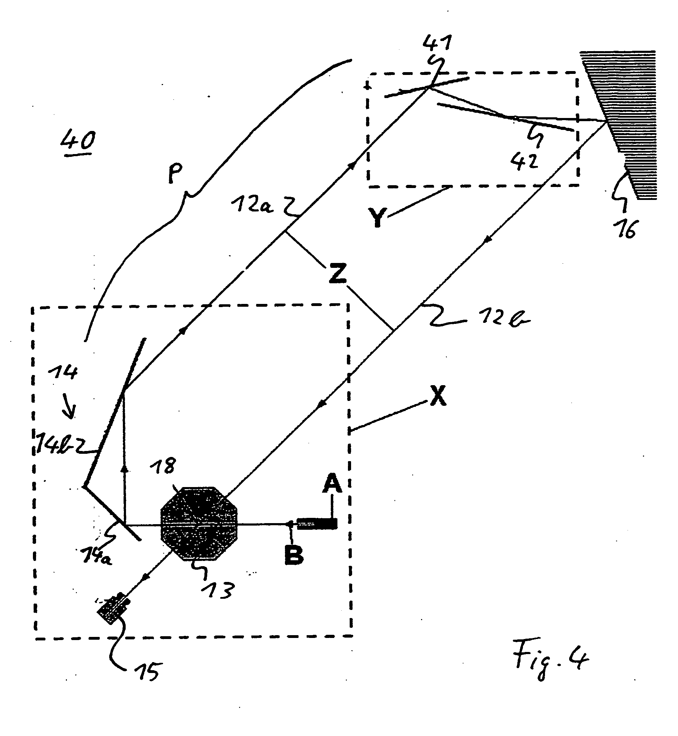

Figur 4 zeigt schematisch eine weitere bevorzugte Ausführungsform der Erfindung, bei der der zur Objektoberfläche geführte Lichtstrahl 12a und der von der Objektoberfläche reflektierte Lichtstrahl 12b größtenteils parallel zueinander verlaufen. Dazu weist die in Figur 4 gezeigte Messeinrichtung 40 ein Paar von Hilfsspiegeln 41, 42 auf, die relativ nahe an dem zu erfassenden Objekt 16 angeordnet sind. Elemente und Bauteile der Messeinrichtung 40, die im Wesentlichen funktionsgleich oder baugleich mit denjenigen der Messeinrichtung 10 sind, sind in Figur 4 mit denselben Bezugszeichen wie in den Figuren 1 - 3 gekennzeichnet und wurden dort bereits beschrieben.

Bei der Messeinrichtung 40 sind das rotierbare Prisma 13 oder Drehprisma und die Spiegeleinrichtung 14 so im Strahlengang angeordnet, dass der vom Objekt reflektierte Lichtstrahl 12b in einem Bereich P des gesendeten Lichtstrahls 12a parallel zu diesem verläuft. Dabei durchlaufen die beiden Lichtstrahlen 12a und 12b das Prisma 13 in einem Winkel zueinander, der gleich dem Winkel ist, den die jeweiligen Prismenflächen zueinander bilden, durch welche die beiden Lichtstrahlen 12a und 12b verlaufen.

Die beiden Hilfsspiegel 41 und 42 lenken den Lichtstrahl 12a, der im Bereich P parallel zum reflektierten Lichtstrahl 12b verläuft, vor dem Auftreffen auf die Oberfläche des Objekts 16 derart um, dass der Lichtstrahl 12a schräg bzw. geneigt auf die Oberfläche auftrifft und somit die Voraussetzungen zur Durchführung des Lichtschnitt - Triangulationsverfahrens erfüllt.

Dadurch kann der Abstand zwischen Messeinheit 40 und dem Objekt 16 in sehr weitem Rahmen variieren. Eine Justage des zum Objekt 16 gesendeten Lichtstrahls 12a, der den Abtaststrahl darstellt, muss nun nicht mehr zwingend durch die Justage des Spiegels 14b der Spiegeleinrichtung 14 erfolgen. Die Spiegel 14a und 14b der Spiegeleinrichtung 14 werden bei dieser Ausführungsform so eingestellt, dass der Strahl 12a im Bereich P parallel zum reflektierten Strahl 12b in einem Abstand Z zu diesem verläuft. Mit den beiden Hilfsspiegeln 41 und 42 wird der richtige Abtastwinkel beim Auftreffen auf das Objekt 16 gewährleistet. Die Hilfsspiegel 41, 42 sind in einem separaten Geräteteil Y der Messeinrichtung 40 untergebracht. Die restlichen Teile der Messeinrichtung 40 sind im Geräteteil X untergebracht, der räumlich vom Geräteteil Y getrennt ist. Durch den parallelen Strahlverlauf können die beiden Geräteteile X und Y einen in weiten Grenzen veränderbaren Abstand voneinander haben, wodurch sich die Anwendungsbereiche dieser Abtastvorrichtung erheblich erweitern lassen.

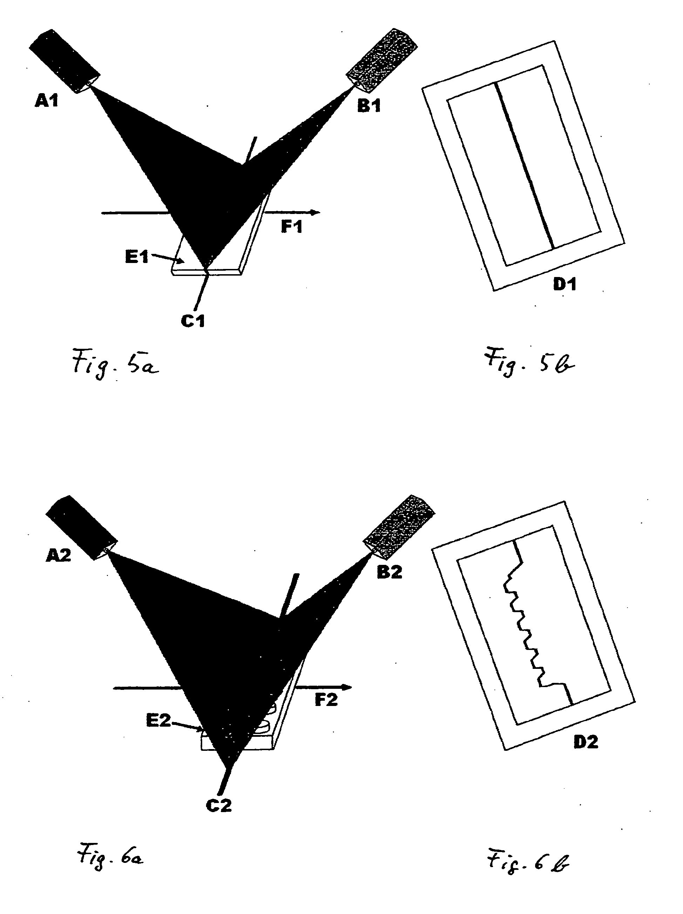

Zur Erläuterung des Lichtschnitt - Triangulationsverfahrens, das in der vorliegenden Erfindung zur Anwendung kommt, dienen zunächst die Figuren 5a und 5b. Bei dem Lichtschnitt - Triangulationsverfahren wird die von einer Lichtquelle A1 auf ein Untersuchungsobjekt E1 projizierte Messlinie C1 vom Objektiv einer Kamera B1 auf die Sensorfläche der Kamera B1 abgebildet. Ist die Oberfläche des Objektes E1 eben, so erscheint die Messlinie C1 als Linie D1 auf dem optischen Sensor der Kamera B1. Um die Struktur der Gesamtoberfläche zu erhalten, wird das Messobjekt E1 entlang einer Bewegungslinie F1 verschoben, sodass die Messlinie C1 während des Messvorgangs über die Oberfläche des Objekts E1 streicht. Während des Messvorgangs zeichnet der Sensor der Kamera B1 in kurzen Zeitabständen das Bild der Messlinie auf und speichert es ab. Durch Vergleichen der Messbilder kann die Oberfläche des Messobjekts, das heißt des zu erfassenden Objekts E1, errechnet werden.

Die Figuren 6a und 6b zeigen nun zur Veranschaulichung die Vermessung der strukturierten Oberfläche eines zu vermessenden Objekts E2. Dabei wird die von der Lichtquelle A2 auf das Objekt E2 projizierte Messlinie C2 vom Objektiv der Kamera B2 auf die Sensorfläche der Kamera B2 abgebildet In dem hier gezeigten Fall ist die Oberfläche des Objekts E2 nicht eben, sodass die Messlinie C2 als Profillinie D2 auf dem Sensor der Kamera B2 erscheint. Um die Struktur der Gesamtoberfläche des Objekts E2 zu erhalten, wird das Objekt E2 entlang der Bewegungslinie F2 verschoben, sodass die Messlinie C2 als Beleuchtungslinie während des Messvorgangs über die gesamte Oberfläche des Objekts E2 streicht. Während des Messvorgangs zeichnet der Sensor der Kamera B2 in kurzen Zeitabständen das Bild der Messlinie bzw. Profillinie D2 auf und speichert es ab. Durch vergleichen der Messbilder kann die Oberfläche des Objekts E2 errechnet werden.

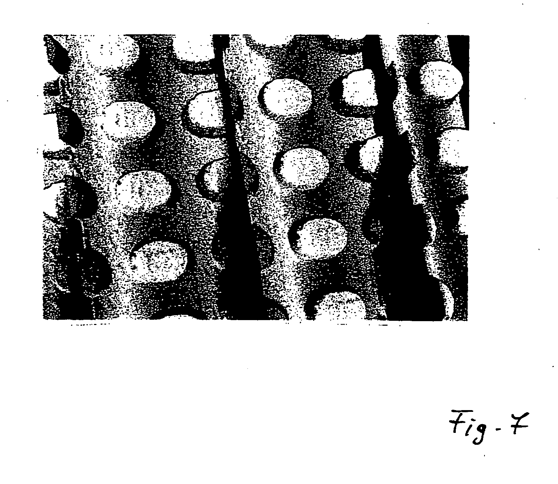

Figur 7 zeigt als Beispiel das Messbild eines Lego^{®} Spielbausteins, das mit der erfindungsgemäßen Vorrichtung erstellt wurde.

Die Umrechnung zur Bestimmung der Profiltiefe erfolgt durch die in Figur 1 gezeigte Auswerteeinheit 17, die eine Prozessoreinheit umfasst und durch geeignete Programmschritte zur Auswertung der Daten nach dem Lichtschnitt - Triangulationsverfahren gesteuert wird.

## Patentansprüche

1. Verfahren zur Erfassung der dreidimensionalen Oberfläche eines Objekts durch Triangulation, bei dem
von einer Lichtquelle (11) ein Lichtstrahl (12a) ausgesendet wird, der geneigt auf eine zu erfassende Oberfläche (16a) eines Objektes (16) projiziert wird, wobei
der Lichtstrahl (12a) mittels eines rotierenden Prismas (13) parallel zu seiner Strahlachse verschoben wird, so dass er die Oberfläche (16a) unter einem konstanten Neigungswinkel (α) überstreicht, und
der von der Oberfläche (16a) des Objekts (16) reflektierte Lichtstrahl (12b) das rotierende Prisma (13) ebenfalls durchläuft und parallel verschoben wird, so dass sich die vorhergehende Parallelverschiebung des Lichtstrahls (12a) wieder aufhebt, und
der reflektierte Lichtstrahl (12b) von einem optischen Sensor (15) erfasst wird, um aus Bilddaten, die vom optischen Sensor (15) erzeugt werden, die Oberfläche (16a) des Objekts (16) zu bestimmen,
**dadurch gekennzeichnet, dass**
der ausgesendete Lichtstrahl (12a) mittels einer im Strahlengang nach dem Prisma (13) angeordneten Spiegeleinrichtung (14) derart zum Objekt (16) hin umgelenkt wird, dass der von der Oberfläche (16a) des Objekts (16) reflektierte Lichtstrahl (12b) das rotierende Prisma (13) durch ein anderes Paar von Prismenflächen (13a, 13b, 13c) durchläuft als der ausgesendete Lichtstrahl (12a).

2. Verfahren nach Anspruch 1, **dadurch gekennzeichnet, dass** der ausgesendete Lichtstrahl (12a) als eine Beleuchtungslinie geformt ist, die sich quer zur Strahlachse erstreckt, und die auf die zu erfassende Oberfläche (16a) projizierte Beleuchtungslinie während der Messung parallel verschoben wird.

3. Verfahren nach Anspruch 1 oder 2, **dadurch gekennzeichnet, dass** als Objekt (16) ein Fahrzeugreifen verwendet wird, und aus den Bilddaten die Profiltiefe des Fahrzeugreifens ermittelt wird.

4. Verfahren nach einem der vorhergehenden Ansprüche, **dadurch gekennzeichnet, dass** das Objekt (16) durch einen Spalt (26) beleuchtet wird, wobei sich die Beleuchtungslinie in Längsrichtung des Spalts (26) erstreckt und während der Messung die Breite des Spalts (26) überstreicht.

5. Verfahren nach einem der vorhergehenden Ansprüche, **dadurch gekennzeichnet, dass** die zu erfassende Oberfläche (16a) relativ zum optischen Sensor (15) im Ruhezustand ist, während der Lichtstrahl (12a) die Oberfläche (16a) überstreicht.

6. Verfahren nach einem der vorhergehenden Ansprüche, **dadurch gekennzeichnet, dass** der zum Objekt (16) gesendete Lichtstrahl (12a) mittels der Anordnung von Spiegeln (14, 14a, 14b, 41, 42) derart ausgerichtet wird, dass er in einem Bereich P parallel zu dem vom Objekt (16) reflektierten Lichtstrahl (12b) verläuft.

7. Verfahren nach einem der vorhergehenden Ansprüche, **dadurch gekennzeichnet, dass** der Lichtstrahl (12a) vor dem Auftreffen auf das Objekt (16) mittels Hilfsspiegeln (41, 42) so umgelenkt wird, dass er schräg auf die Oberfläche (16a) des Objekts (16) einfällt.

8. Vorrichtung zur Erfassung der dreidimensionalen Oberfläche eines Objekts mittels Triangulation, umfassend:
eine Lichtquelle (11), die einen Lichtstrahl (12a) zur Projektion auf eine zu erfassende Oberfläche (16a) eines Objektes (16) aussendet;
einen optischen Sensor (15), der den von der Oberfläche (16a) reflektierten Lichtstrahl (12b) erfasst und Bilddaten erzeugt;
eine Auswerteeinheit (17), die aus den Bilddaten des optischen Sensors (15) die Oberfläche (16a) des Objekts (16) bestimmt; und
ein rotierbares Prisma (13), das den auf die Oberfläche (16a) des Objekts (16) projizierten Lichtstrahl (12a) parallel zu seiner Strahlachse verschiebt, so dass er die zu erfassende Oberfläche (16a) unter einem konstanten Neigungswinkel (α) überstreicht;
wobei das rotierbare Prisma (13) derart angeordnet ist, dass sowohl der ausgesendete Lichtstrahl (12a) als auch der vom Objekt reflektierte Lichtstrahl (12b) das rotierbare Prisma (13) durchläuft, so dass sich die beiden Parallelverschiebungen des Lichtstrahls (12a, 12b) gegenseitig aufheben,
**gekennzeichnet durch**
eine Spiegeleinrichtung (14) zum Umlenken des ausgesendeten Lichtstrahls (12a) nach Durchlaufen des Prismas (13) zum Objekt (16) hin, wobei die Spiegeleinrichtung (14) und das Prisma (13) derart angeordnet sind, dass der von der Oberfläche (16a) des Objekts (16) reflektierte Lichtstrahl (12b) das rotierende Prisma (13) **durch** ein anderes Paar von Prismenflächen (13a, 13b, 13c) durchläuft als der ausgesendete Lichtstrahl (12a).

9. Vorrichtung nach Anspruch 8, **dadurch gekennzeichnet, dass** die Lichtquelle (11) derart gestaltet ist, dass der ausgesendete Lichtstrahl (12a) als eine Beleuchtungslinie geformt ist, die sich quer zur Strahlrichtung erstreckt und im Betrieb einen Bereich der Oberfläche (16a) durch Parallelverschiebung überstreicht.

10. Vorrichtung nach Anspruch 9, **dadurch gekennzeichnet, dass** die von der Objektoberfläche (16a) reflektierte Beleuchtungslinie zur Vermessung der Objektoberfläche (16a) mittels Triangulation verwendet wird.

11. Vorrichtung nach einem der Ansprüche 8 bis 10, **dadurch gekennzeichnet, dass** das Objekt (16) ein Fahrzeugreifen ist, und die Auswerteeinheit (17) zur Bestimmung der Profiltiefe des Fahrzeugreifens aus den Bilddaten ausgestaltet ist.

12. Vorrichtung nach einem der Ansprüche 9 bis 11, **gekennzeichnet durch** eine Wand (27), in der ein Spalt (26) ausgebildet ist, **durch** den das Objekt (16) beleuchtet wird, wobei sich der Spalt (26) parallel zur Beleuchtungslinie erstreckt.

13. Vorrichtung nach einem der Ansprüche 8 bis 12, **dadurch gekennzeichnet, dass** die Spiegeleinrichtung (14) mindestens ein Spiegelpaar mit gegeneinander geneigten Spiegeln (14a, 14b) umfasst, wobei das Spiegelpaar in Strahlrichtung verschiebbar ist und der Winkel zwischen den beiden Spiegeln (14a, 14b) einstellbar ist.

14. Vorrichtung nach einem der Ansprüche 8 bis 13, **dadurch gekennzeichnet, dass** der zum Objekt (16) gesendete Lichtstrahl (12a) im wesentlichen parallel zu dem vom Objekt (16) reflektierten Lichtstrahl (12b) verläuft.

15. Vorrichtung nach einem der Ansprüche 8 bis 14, **dadurch gekennzeichnet, dass** die Spiegeleinrichtung (14) Hilfsspiegel (41, 42) umfasst, die den auf das Objekt (16) gerichteten Lichtstrahl (12a) derart umlenken, dass er schräg auf die Oberfläche (16a) des Objekts (16) trifft.

16. Vorrichtung nach einem der Ansprüche 8 bis 15, **gekennzeichnet durch** ein Gehäuse (21), das Fenster (24, 25) mit selbstreinigenden Oberflächen aufweist, **durch** die der ausgesendete und/oder der vom Objekt reflektierte Lichtstrahl (12a, 12b) geführt wird.

## Claims

1. Method for capturing the three-dimensional surface of an object by way of triangulation, in which a light beam (12a) is emitted by a light source (11), which light beam is projected obliquely onto a surface (16a) to be captured of an object (16),
wherein
the light beam (12a) is displaced in a manner parallel to its beam axis using a rotating prism (13) such that it scans over the surface (16a) at a constant inclination angle (α), and
the light beam (12b), which is reflected by the surface (16a) of the object (16), likewise passes through the rotating prism (13) and is displaced in a parallel manner with the result that the preceding parallel displacement of the light beam (12a) is cancelled, and the reflected light beam (12b) is captured by an optical sensor (15) in order to determine the surface (16a) of the object (16) from image data produced by the optical sensor (15),
**characterized in that**
the emitted light beam (12a) is deflected using a mirror device (14) arranged in the beam path downstream of the prism (13) to the object (16) such that the light beam (12b) reflected by the surface (16a) of the object (16) passes through the rotating prism (13) by way of a different pair of prism surfaces (13a, 13b, 13c) than the emitted light beam (12a).

2. Method according to Claim 1, **characterized in that** the emitted light beam (12a) is shaped as an illumination line, which extends transversely to the beam axis, and the illumination line projected onto the surface (16a) to be captured is displaced in a parallel manner during the measurement.

3. Method according to Claim 1 or 2, **characterized in that** the object (16) used is a vehicle tyre, and the profile depth of the vehicle tyre is ascertained from the image data.

4. Method according to one of the preceding claims, **characterized in that** the object (16) is illuminated through a gap (26), wherein the illumination line extends in the longitudinal direction of the gap (26) and scans over the width of the gap (26) during the measurement.

5. Method according to one of the preceding claims, **characterized in that** the surface (16a) to be captured is in a rest state relative to the optical sensor (15) while the light beam (12a) scans over the surface (16a).

6. Method according to one of the preceding claims, **characterized in that** the light beam (12a) transmitted to the object (16) is aligned using the arrangement of mirrors (14, 14a, 14b, 41, 42) such that it extends in a region P parallel to the light beam (12b) reflected by the object (16).

7. Method according to one of the preceding claims, **characterized in that** the light beam (12a) is deflected using auxiliary mirrors (41, 42) before it impinges on the object (16), such that it strikes the surface (16a) of the object (16) obliquely.

8. Apparatus for capturing the three-dimensional surface of an object by way of triangulation, comprising:
a light source (11), which emits a light beam (12a) for projection onto a surface (16a) to be captured of an object (16);
an optical sensor (15), which captures the light beam (12b) reflected by the surface (16a) and produces image data;
an evaluation unit (17), which determines the surface (16a) of the object (16) from the image data of the optical sensor (15); and
a rotatable prism (13), which displaces the light beam (12a), which is projected onto the surface (16a) of the object (16), in a manner parallel to its beam axis such that it scans over the surface (16a) to be captured at a constant inclination angle (α);
wherein the rotatable prism (13) is arranged such that both the emitted light beam (12a) and the light beam (12b) reflected by the object pass through the rotatable prism (13), with the result that the two parallel displacements of the light beam (12a, 12b) cancel each other out,
**characterized by**
a mirror device (14) for deflecting the emitted light beam (12a), after it has passed through the prism (13), toward the object (16), wherein the mirror device (14) and the prism (13) are arranged such that the light beam (12b) reflected by the surface (16a) of the object (16) passes through the rotating prism (13) by way of a different pair of prism surfaces (13a, 13b, 13c) than the emitted light beam (12a).

9. Apparatus according to Claim 8, **characterized in that** the light source (11) is configured such that the emitted light beam (12a) is shaped as an illumination line, which extends transversely to the beam direction and during operation scans over a region of the surface (16a) by way of parallel displacement.

10. Apparatus according to Claim 9, **characterized in that** the illumination line reflected by the object surface (16a) is used to measure the object surface (16a) using triangulation.

11. Apparatus according to one of Claims 8 to 10, **characterized in that** the object (16) is a vehicle tyre and the evaluation unit (17) is configured for determining the profile depth of the vehicle tyre from the image data.

12. Apparatus according to one of Claims 9 to 11, **characterized by** a wall (27) in which a gap (26) is formed, through which the object (16) is illuminated, wherein the gap (26) extends parallel to the illumination line.

13. Apparatus according to one of Claims 8 to 12, **characterized in that** the mirror device (14) comprises at least one mirror pair with mirrors (14a, 14b) which are inclined relative to each other, wherein the mirror pair is displaceable in the beam direction and the angle between the two mirrors (14a, 14b) is adjustable.

14. Apparatus according to one of Claims 8 to 13, **characterized in that** the light beam (12a) transmitted to the object (16) extends substantially parallel to the light beam (12b) reflected by the object (16).

15. Apparatus according to one of Claims 8 to 14, **characterized in that** the mirror device (14) comprises auxiliary mirrors (41, 42), which deflect the light beam (12a) directed at the object (16) such that it strikes the surface (16a) of the object (16) obliquely.

16. Apparatus according to one of Claims 8 to 15, **characterized by** a housing (21) having windows (24, 25) with self-cleaning surfaces, through which the emitted light beam (12a) and/or the light beam (12b) reflected by the object is guided.

## Revendications

1. Procédé de détection de la surface tridimensionnelle d'un objet par triangulation, dans lequel
une source de lumière (11) émet un faisceau lumineux (12a) qui est apte à être projeté sur une surface à détecter (16a) d'un objet (16), dans lequel le faisceau lumineux (12a) est déplacé au moyen d'un prisme rotatif (13) parallèlement à son axe de faisceau de manière à ce qu'il couvre la surface (16a) sous un angle d'inclinaison (α) constant, et
le faisceau lumineux (12b) réfléchi par la surface (16a) de l'objet (16) passe également à travers le prisme rotatif (13) et est déplacé parallèlement de manière à ce que le déplacement parallèle précédent du faisceau lumineux (12a) soit annulé, et
le faisceau lumineux réfléchi (12b) est détecté par un capteur optique (15) afin de déterminer à partir de données d'image qui sont générées par le capteur optique (15) la surface (16a) de l'objet (16), **caractérisé en ce que**
le faisceau lumineux émis (12a) est dévié vers l'objet (16) au moyen d'un dispositif à miroirs (14) disposé sur le chemin de faisceau en aval du prisme (13) de manière à ce que le faisceau lumineux (12b) réfléchi par la surface (16a) de l'objet (16) traverse le prisme rotatif (13) à travers une autre paire de surfaces de prisme (13a, 13b, 13c) que le faisceau lumineux émis (12a).

2. Procédé selon la revendication 1, **caractérisé en ce que** le faisceau lumineux émis (12a) est mis sous la forme d'une ligne d'éclairement qui s'étend transversalement à l'axe de faisceau et **en ce que** la ligne d'éclairement projetée sur la surface à détecter (16a) est déplacée parallèlement pendant la mesure.

3. Procédé selon la revendication 1 ou 2, **caractérisé en ce qu'**on utilise en tant qu'objet (16) un pneumatique de véhicule et **en ce que** la profondeur du profil du pneumatique de véhicule est déterminée à partir des données d'image.

4. Procédé selon l'une quelconque des revendications précédentes, **caractérisé en ce que** l'objet (16) est éclairé à travers une fente (26), la ligne d'éclairement s'étendant dans la direction longitudinale de la fente (26) et couvrant la largeur de la fente (26) pendant la mesure.

5. Procédé selon l'une quelconque des revendications précédentes, **caractérisé en ce que** la surface (16a) à détecter est à l'état de repos par rapport au capteur optique (15) pendant que le faisceau lumineux (12a) couvre la surface (16a).

6. Procédé selon l'une quelconque des revendications précédentes, **caractérisé en ce que** le faisceau lumineux (12a) émis vers l'objet (16) est orienté au moyen de l'agencement de miroirs (14, 14a, 14b, 41, 42) de telle manière qu'il se propage dans une zone P parallèle au faisceau lumineux (12b) réfléchi par l'objet (16).

7. Procédé selon l'une quelconque des revendications précédentes, **caractérisé en ce que** le faisceau lumineux (12a) est dévié avant d'être incident sur l'objet (16) au moyen de miroirs auxiliaires (41, 42) afin qu'il soit incident de manière oblique sur la surface (16a) de l'objet (16).

8. Procédé destiné à détecter la surface tridimensionnelle d'un objet par triangulation, comprenant:
une source de lumière (11) qui émet un faisceau lumineux (12a) destiné à être projeté sur une surface à détecter (16a) d'un objet (16) ;
un capteur optique (15) qui détecte le faisceau lumineux (12b) réfléchi par la surface (16a) et génère des données d'image ;
une unité d'évaluation (17) qui détermine à partir des données d'image du capteur optique (15) la surface (16a) de l'objet (16) ; et
un prisme rotatif (13) qui déplace le faisceau lumineux (12a) projeté sur la surface (16a) de l'objet (16) parallèlement à son axe de faisceau, de manière à ce qu'il couvre la surface à détecter (16a) sous un angle d'inclinaison (α) constant ;
dans lequel le prisme rotatif (13) est agencé de telle manière que le faisceau lumineux émis (12a) ainsi que le faisceau lumineux (12b) réfléchi par l'objet traversent le prisme rotatif (13) afin que les deux déplacements parallèles des faisceaux lumineux (12a, 12b) s'annulent mutuellement, **caractérisé par** un dispositif à miroirs (14) destiné à dévier le faisceau lumineux (12a) émis après son passage à travers le prisme (13) vers l'objet (16), dans lequel le dispositif à miroirs (14) et le prisme (13) sont agencés de telle manière que le faisceau lumineux (12b) réfléchi par la surface (16a) de l'objet (16) traverse le prisme rotatif (13) à travers une autre paire de surfaces de prisme (13a, 13b, 13c) que le faisceau lumineux émis (12a).

9. Dispositif selon la revendication 8, **caractérisé en ce que** la source de lumière (11) est conçue de telle manière que le faisceau lumineux émis (12a) soit mis sous la forme d'une ligne d'éclairement qui s'étend transversalement à la direction du faisceau et couvre, lors du fonctionnement, une zone de la surface à détecter (16a) par déplacement parallèle.

10. Dispositif selon la revendication 9, **caractérisé en ce que** la ligne d'éclairement réfléchie par la surface (16a) de l'objet est utilisée pour mesurer la surface (16a) de l'objet par triangulation.

11. Dispositif selon l'une quelconque des revendications 8 à 10, **caractérisé en ce que** l'objet (16) est un pneumatique de véhicule, et **en ce que** l'unité d'évaluation (17) est conçue pour déterminer la profondeur du profil du pneumatique de véhicule à partir des données d'image.

12. Dispositif selon l'une quelconque des revendications à 9 à 11, **caractérisé par** une paroi (27) dans laquelle est formée une fente (26) à travers laquelle l'objet (16) est éclairé, la fente (26) s'étendant parallèlement à la ligne d'éclairement.

13. Dispositif selon l'une quelconque des revendications 8 à 12, **caractérisé en ce que** le dispositif à miroirs (14) comprend au moins une paire de miroirs comportant des miroirs (14a, 14b) inclinés en sens opposé, dans lequel la paire de miroirs peut être déplacée dans la direction du faisceau et l'angle formé entre les deux miroirs (14a, 14b) est réglable.

14. Dispositif selon l'une quelconque des revendications 8 à 13, **caractérisé en ce que** le faisceau lumineux (12a) émis vers l'objet (16) se propage essentiellement parallèlement au faisceau lumineux (12b) réfléchi par l'objet (16).

15. Dispositif selon l'une quelconque des revendications 8 à 14, **caractérisé en ce que** le dispositif à miroirs (14) comprend des miroirs auxiliaires (41, 42) qui dévient le faisceau lumineux (12a) dirigé sur l'objet (16) afin qu'il soit incident de manière oblique sur la surface (16a) de l'objet (16).

16. Dispositif selon l'une quelconque des revendications 8 à 15, **caractérisé par** un boîtier (21) qui présente des fenêtres (24, 25) ayant des surfaces autonettoyantes à travers lesquelles sont acheminés le faisceau lumineux émis et/ou réfléchi par l'objet (12a, 12b).
